# EUROPEAN PATENT APPLICATION

(11) **EP 1 120 368 A1**
(43) Date of publication of application: **01.08.2001**
(21) Application number: 00300600.4
(22) Date of filing: 27.01.2000
(51) Int. Cl.: B65G 47/256

(54) **Apparatus and method for sorting of articles**

(71) Applicant: Crown Cork & Seal Technologies Corporation, Alsip, IL 60803-2599 (US)
(72) Inventor: The designation of the inventor has not yet been filed
(74) Representative: Gadsden, Robert Edward

(57) **Abstract**

Apparatus for sorting articles such as caps (2) comprises a sorting zone (7) with an input chute (1) and first and second exits (12), (13). A series of angled holes (19) are used to direct a continuous flow of air from a fan (14) into the sorting zone such that caps having a first orientation will be urged towards the first exit (12). Conversely, a series of angled holes (20) are used to direct a continuous flow of air from the fan (14) into the sorting zone such that caps having a second orientation are urged towards the second exit (13). The air flow from the holes (19) and (20) is directed at each and every cap, and it is only the different orientation of the caps (2) which causes them to react differently so as to be urged towards either the first or second exits.

## Description

This invention relates to the sorting of articles such as caps for jars or bottles. These caps, whether they be metal, plastic, or combinations thereof, need to be fed at high speed to a capping machine where they are affixed onto the filled containers. The caps generally have a planar 'top' with a skirt depending therefrom. The caps may be either in a first (or "correct") orientation, with the skirt facing in one direction ready for feeding to a capping machine, or a second (or "incorrect") orientation, with the skirt facing in the opposite direction. This invention relates to a method and apparatus for sorting caps into their first and second orientations, so that only caps having a correct orientation are fed to the capping machine.

Previous proposals for cap sorting machines use vision systems to identify where the caps are in their correct orientation, and then take action to remove incorrectly oriented caps from the stream, either by mechanical means or by directing a pulse of fluid such as compressed air to blow the caps out of the stream. Proximity sensors may also be used to detect the orientation of the caps. Where caps are formed of a magnetic material such as steel, a magnetic sorting technique can be employed. This uses the difference in magnetic attraction between correct and incorrectly oriented caps (one of which contacts the magnetic belt with only its "rim" and the other with the whole "top" of the cap). The disadvantage with all of these techniques is the speed at which they can be employed, and there remains a need for a sorting technique which can be used at high speeds.

Accordingly there is provided apparatus for sorting articles such as caps which can have either a first or a second orientation, the apparatus comprising:
i) a sorting zone;
ii) an input path for feeding articles to the sorting zone in an unsorted distribution of their first and second orientations;
iii) a first exit from the sorting zone for articles having their first orientation;
iv) a second exit from the sorting zone for articles having their second orientation; and
v) at least one source of fluid, the fluid being caused to impinge continuously across the sorting zone at an oblique angle such that articles having the first orientation are directed towards the first exit, whilst articles having the second orientation are directed towards the second exit.

Conveniently there is at least a first fluid inlet adapted to direct fluid into the sorting zone at an angle such that articles having a first orientation are urged towards the first exit whilst articles having the second orientation are substantially unaffected. The invention relies on the principle that a continuous flow of fluid directed at an angle from above or below will have a different effect on an article such as a cap depending on whether it is in its first or second orientation. If the fluid strikes the planar top of the cap, the cap will be relatively unaffected. However, when the same continuous flow of fluid strikes the cap in its opposite orientation, the fluid will impinge on the upstanding side wall of the cap and move it sideways. It is this principle which is used to sort the caps at high speed.

In one such arrangement the articles are fed on a carrier (such as a chute or rails) which is tilted at a slight angle to cause the caps to travel naturally to the second exit. However, for correctly oriented caps, the fluid pushes the caps against the angle of the carrier towards the first exit. Hence the caps are sorted whilst being continuously fed through the sorting zone. In a preferred arrangement there is at least a second fluid inlet adapted to direct fluid into the sorting zone at an angle such that articles having the second orientation are urged towards the second exit whereas articles having the first-orientation are substantially unaffected. Conveniently the at least one first fluid inlet is adapted to direct fluid from a first face of the sorting zone and having a component in a direction towards a first side of the sorting zone, whilst the at least one second fluid inlet is adapted to direct fluid from a second face of the sorting zone and having a component towards the second side of the sorting zone. In this arrangement the requirement for a tilted carrier is obviated, and articles are urged one way or another, towards the first and second exits depending on their orientation.

Preferably there is a plurality of first and second fluid inlets extending along the sorting zone. The fluid inlets may conveniently direct fluid having a component urging the articles forward in the direction in which they are travelling through the sorting zone, in addition to a sideways component urging them towards either the first or second exits. The fluid is conveniently air in which case the fluid source is one or more fans. Conveniently the fluid source is a single fan adapted to supply a continuous flow of air to each of the or each first fluid inlets and the or each second fluid inlets. In one convenient arrangement the sorting zone is essentially Y-shaped with the input path at one end and the first and second exits at the opposite end.

The invention further resides in apparatus for sorting caps which can have either a correct or incorrect orientation, the apparatus comprising:
i) a sorting zone;
ii) an input path for feeding caps to the sorting zone in an unsorted distribution of their correct and incorrect orientations;
iii) a first exit from the sorting zone for caps having the correct orientation;
iv) a second exit from the sorting zone for caps having the incorrect orientation;
v) at least a first fluid inlet adapted to direct fluid into the sorting zone at an angle such that caps having the correct orientation are urged towards the first exit whilst caps having the incorrect orientation are substantially unaffected;
vi) at least a second fluid inlet adapted to direct fluid into the sorting zone at an angle such that caps having the incorrect orientation are urged towards the second exit whilst caps having the correct orientation are substantially unaffected; and
vii) a fluid source adapted to provide a continuous flow of fluid to the at least one first and second fluid inlets.

The invention further resides in a method of sorting articles such as caps which can have either a first or a second orientation, the method comprising the steps of:
i) conveying the articles through a sorting zone in an unsorted distribution of their first and second orientations, the sorting zone having first and second exits; and
ii) directing at least one jet of fluid continuously across the sorting zone at an oblique angle such that articles having the first orientation are directed towards the first exit, and articles having the second orientation are directed towards the second exit.

The present invention will now be further described, by way of example only, with reference to the accompanying drawings, in which:-
Fig.1 is a schematic front view of apparatus in accordance with the first invention.
Fig.2 is a sectional plan view through the line A-A in Fig. 1,
Figs. 3 and 4 are enlarged schematic views through a part of the apparatus of Fig.1, showing a cap in a correct and incorrect orientation respectively, and
Fig.5 is a schematic sectional view equivalent to Fig.4, but according to an alternative embodiment of the invention.

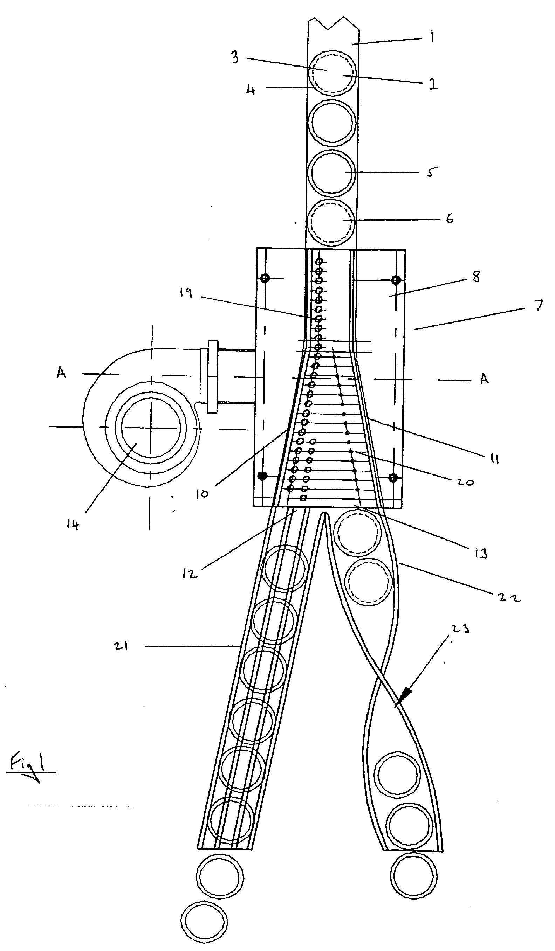

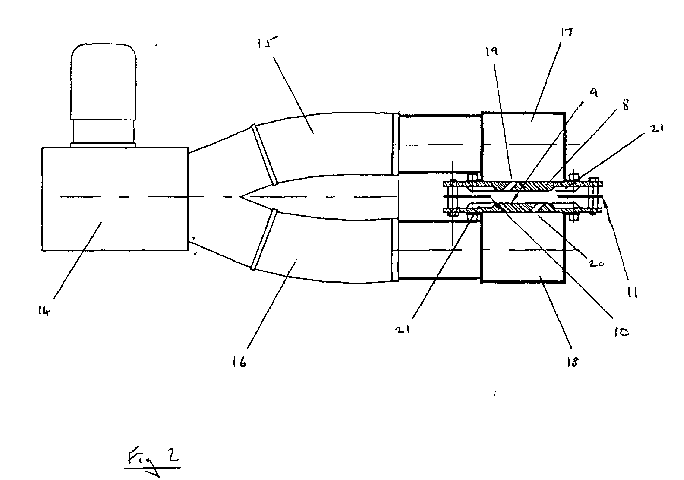

Referring to Figs. 1 and 2, there is shown a cap sorting station comprising an input chute 1, on which caps 2 are fed in a steady stream. The caps comprise essentially a central panel 3, and a side wall skirt 4 depending therefrom. The caps can therefore assume one of two orientations, a first orientation shown generally at 5, or a second orientation shown generally at 6.

Caps from the input chute 1 are fed to a sorting zone 7 which is defined by a front plate 8, a back plate 9, and side rails 10 and 11. At the entrance to the sorting zone, the side rails are parallel, but further along the sorting zone they diverge to allow two possible exits 12 and 13 from the sorting zone. A first exit 12 is adjacent the side rail 10, whilst the second exit 13 is adjacent the side rail 11.

A fan 14 supplies a continuous flow of air through ducts 15 and 16 to chambers 17 and 18 adjacent the front plate 8 and back plate 9 respectively. The front plate 8 is provided with a plurality of holes 19 which allow air from the chamber 17 to enter the sorting zone 7. The holes are angled such that the air flowing therethrough has a component directed towards the side rail 10. In similar fashion the back plate 9 has a plurality of holes 20 allowing air to enter the sorting zone 7 from the chamber 18, the holes 20 being angled such that the air flow has a component directed towards the side rail 11. Recesses 21, located in the front and back plates 8 and 9 --towards the edges thereof, allow the air entering the sorting zone via the holes 19 and 20 to vent. The holes 19 and 20 are angled, not only towards the side rails 10 and 11, but also with a component in the general direction of the exits 12 and 13, to propel the caps along the sorting zone 7.

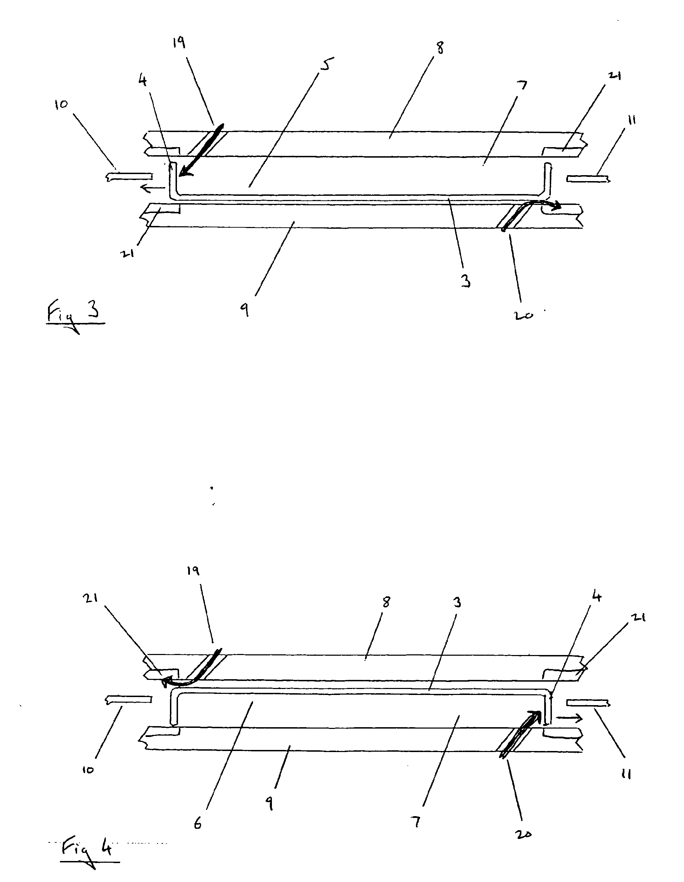

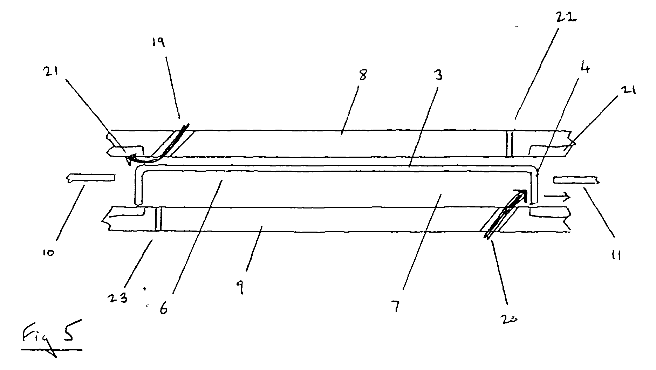

The separation of the correctly oriented caps 5 and the incorrectly oriented caps 6 will now be described with specific reference to Figs. 3 and 4. As a correctly oriented cap progresses through the sorting zone 7, jets of air will impinge upon the cap through the angled holes 19 and 20. As is shown in Fig.3, the air flowing through the holes 20 will impinge upon the panel 3, and will have minimal impact upon the cap. However, the air flowing through the holes 19 will impact upon the side skirt 4 and push the cap towards the side rail 10. Hence as the cap progresses through the sorting zone 7, it will follow the side rail 10 to the first exit 12.

Conversely, an incorrect oriented cap 6 will experience a different reaction to the same pattern of air flow from holes 19 and 20. As shown in Fig.4, the air flowing through the holes 19 will impinge upon the panel 3 and have minimal effect, whilst the air flowing through the holes 20 will this time impinge upon the side skirt 4 propelling the cap towards the side rail 11. Thus incorrectly oriented caps will follow side rail 11 to the second exit 13.

A first output chute 21 for correct caps is associated with the exit 12, whilst a second output chute 22 for incorrect caps is associated with the exit 13. The chute 22 has a 180° twist as shown at 23 to cause the incorrect caps to be inverted (turning them into correctly oriented caps) before they rejoin the stream of caps at a merging station (not shown).

Fig.5 shows an alternative embodiment in which additional holes 22 and 23 are provided in the front plate 8 and back plate 9 respectively, opposite the angled holes 19 and 20. The additional holes 22 and 23 are perpendicular to the front and back plates, rather than being angled, and are smaller in diameter than the angled holes 29 and 20. Air from the chambers 17 and 18 flows through the additional holes 22 and 23, the purpose of which is to counterbalance the air flow from the holes 19 and 20 and prevent the cap 6 from being twisted within the sorting zone. This ensures that the air flow from the angled holes 19 and 20 moves the caps sideways rather than jamming the caps in the sorting zone 7 between the front plate 8 and back plate 9.

It will be seen that the fan generates a constant flow of air which is deployed equally to correctly and incorrectly oriented caps and it is only the different orientation of the caps which causes them to react differently to the flow of air. The apparatus is therefore simple and can operate at high speed, allowing a fast throughput of caps, as it does not require any changes (e.g. pulses of air, mechanical switches etc) as the individual caps pass by. Speeds of 2200 caps per minute have been achieved with the apparatus described above.

## Claims

1. Apparatus for sorting articles such as caps which can have either a first or a second orientation, the apparatus comprising:
i) a sorting zone;
ii) an input path for feeding articles to the sorting zone in an unsorted distribution of their first and second orientations;
iii) a first exit from the sorting zone for articles having their first orientation;
iv) a second exit from the sorting zone for articles having their second orientation; and
v) at least one source of fluid, the fluid being caused to impinge continuously across the sorting zone at an oblique angle such that articles having the first orientation are directed towards the first exit whilst articles having the second orientation are directed towards the second exit.

2. Apparatus according to claim 1, characterised in that there is at least a first fluid inlet adapted to direct fluid into the sorting zone at an angle such that articles having the first orientation are urged towards the first exit whilst articles having the second orientation are substantially unaffected.

3. Apparatus according to claim 2, characterised in that there is at least a second fluid inlet adapted to direct fluid into the sorting zone at an angle such that articles having the second orientation are urged towards the second exit whilst articles having the first orientation are substantially unaffected.

4. Apparatus according to claim 2, characterised in that the at least one first fluid inlet is adapted to direct fluid from a first face of the sorting zone and having a component in a direction towards a first side of the sorting zone.

5. Apparatus according to claim 3, characterised in that the at least one second fluid inlet is adapted to direct fluid from a second face of the sorting zone and having a component in a direction towards a second side of the sorting zone.

6. Apparatus according to claim 2, characterised in that there is a plurality of first fluid inlets extending along the sorting zone.

7. Apparatus according to claim 3, characterised in that there is a plurality of second fluid inlets extending along the sorting zone.

8. Apparatus according to any preceding claim, characterised in that the fluid is air.

9. Apparatus according to claim 8, characterised in that the fluid source is one or more fans.

10. Apparatus according to claim 9, characterised in that the fluid source is a single fan adapted to supply a continuous flow of air to each of the or each first fluid inlets and the or each second fluid inlets.

11. Apparatus according to any preceding claim, characterised in that the sorting zone is essentially Y-shaped with the input path at one end and the first and second exits at the opposite end.

12. Apparatus for sorting caps which can have either a correct or an incorrect orientation, the apparatus comprising:
i) a sorting zone;
ii) an input path for feeding caps to the sorting zone in an unsorted distribution of their correct and incorrect orientations;
iii) a first exit from the sorting zone for caps having the correct orientation;
iv) a second exit from the sorting zone for caps having the incorrect orientation;
v) at least a first fluid inlet adapted to direct fluid into the sorting zone at an angle such that caps having the correct orientation are urged towards the first exit whilst caps having the incorrect orientation are substantially unaffected;
vi) at least a second fluid inlet adapted to direct fluid into the sorting zone at an angle such that caps having the incorrect orientation are urged towards the second exit whilst caps having the correct orientation are substantially unaffected; and
vii) a fluid source adapted to provide a continuous flow of fluid to the at least one first and second inlets.

13. A method of sorting articles such as caps which can have either a first or a second orientation, the method comprising the steps of:
i) conveying the articles through a sorting zone in an unsorted distribution of their first and second orientations, the sorting zone having first and second exits; and
ii) directing at least one jet of fluid continuously across the sorting zone at an oblique angle such that articles having the first orientation are directed towards the first exit, and articles having the second orientation are directed towards the second exit.
